# EUROPEAN PATENT APPLICATION

(11) **EP 1 223 252 A2**
(43) Date of publication of application: **17.07.2002**
(21) Application number: 01310147.2
(22) Date of filing: 04.12.2001
(51) Int. Cl.: E03F 5/10, E03F 5/14

(54) **Screening device**

(30) Priority: 11.01.2001 GB 0100754; 08.06.2001 GB 0114039
(71) Applicant: MONO PUMPS LIMITED, Audenshaw, Manchester M34 5DQ (GB)
(72) Inventor: Thomas, Gareth David, Hollingworth SK14 8JG (GB); Collins, Paul Andrew, Gorton, Manchester M18 8PN (GB)
(74) Representative: Leeming, John Gerard

(57) **Abstract**

A screening device comprises a generally cylindrical, horizontally disposed chamber within which is provided a rotatable cleaning member. The rotatable cleaning member comprises a plurality of radial blades tipped with flexible webs and/or brushes to make a seal to the walls of the chamber. The chamber has an inlet in one side and a screened outlet in a lower portion of the second side. Flow of liquid, e.g. wastewater, from inlet to the screened outlet drives the rotatable cleaning device to rotate. The rotatable cleaning device thereby sweeps debris off the screen panel and returns it to the main flow through the inlet.

## Description

The present invention relates to screening devices, principally but not exclusively for use in screening overflow in municipal wastewater channels or riverbanks and water abstraction from, e.g., rivers.

Channels taking municipal wastewater, e.g. to water filtration or treatment plants, often need to be provided with overflow channels to cope with higher than normal flow volumes, e.g. in the event of a storm. Waste water will generally include both floating and suspended debris, particularly in the event of a storm, and it is desirable to keep this debris out of the overflow channel to prevent the overflow channel being blocked and because the overflow channel may well bypass the water filtration and treatment plant. A simple grid or mesh may be provided between the wastewater channel and overflow channel, but this will quickly become blocked with debris. To prevent blockages, it is known to provide a part cylindrical static screen, lying with its axis parallel to the surface of the water, which is kept clean by a rotating helical brush. In installations where power cannot be provided, or for economy, the helical brush may be driven by a water wheel which is driven by the flow of water into the overflow. To provide sufficient power to drive the helical brushes, the waterwheel is generally positioned in parallel with the screen and thus provides a route whereby debris may enter the overflow channel. There is therefore a need for an improved screening device suitable for use in, e.g. municipal wastewater channels to prevent debris reaching overflow channels.

According to the present invention there is provided a screening device comprising a generally cylindrical, horizontally disposed chamber having an unscreened inlet from a first channel in a first side and a screened outlet to a second channel in a lower portion of a second side; and a rotatable cleaning member disposed within said chamber and arranged to rotate with a flow of water from said inlet to said screened outlet to sweep said screened output, and to return debris swept from said screened outlet to said first channel.

Preferably, the flow of water through the device drives the rotating brush to sweep the screened outlet and keep it free of debris, preventing blockages. In high flow situations, the inlet and outlet can be at the same height but if such an arrangement does not result in sufficient flow to drive the rotating cleaning member, the bottom of the inlet can be located higher than the bottom of outlet to provide a head of water. The debris which does not pass through the screened outlet is swept around the inside of the chamber by the rotatable cleaning device and returned via the inlet. The main channel, e.g. if it leads to a water treatment plant, would normally be provided with devices for dealing with floating debris which can deal with the debris rejected by the screen as well as that flowing down the main channel. There is therefore no need to provide additional devices to dispose of the debris blocked by the screening device of the invention. Where the inlet and outlet are at the same level, the retention of debris in the device when it is not operating is minimised.

The rotatable cleaning member preferably comprises a plurality of radial blades extending parallel to the axis of said chamber for substantially all the length of said chamber. In this arrangement, the radial blades provide the greatest area on which the pressure of the water flow can act to drive the rotating brush to rotate. The ends of the radial blades may be directed backwards relative to the direction of rotation of the rotatable brush in use and may be provided with a flexible sealing strip or brushes to make a seal to the wall of the chamber.

In an alternative embodiment, the screening device further comprises a screening device further comprising a paddle drum positioned below said screened outlet so as to be driven to rotate by liquid flowing out of said screened outlet and drive means connecting said paddle drum to said rotatable cleaning member so that rotation of said paddle drum drives said rotatable cleaning member.

With such an arrangement, the water falling from the outlet drives the paddle blades to rotate, providing ample power to rotate the cleaning member in the screening chamber.

The invention will be further described below with reference to an exemplary embodiment and the accompanying drawings in which:
Figure 1 is a sectional end view of the screening device according to a first embodiment of the invention;
Figure 2 is a view similar to Figure 1 showing the operation of the screen according to the first embodiment of the invention;
Figure 3 is a cross-section through a municipal wastewater channel with a screen according to the invention installed;
Figure 4 is a view similar to Figure 3 but with the wastewater channel in an overflow condition;
Figure 5 is an end view showing hidden detail of a screening device according to a second embodiment of the invention; and
Figure 6 is a view similar to Figure 5 showing the screening device of the second embodiment in use.

In the various drawings, like parts are indicated by like reference numerals.

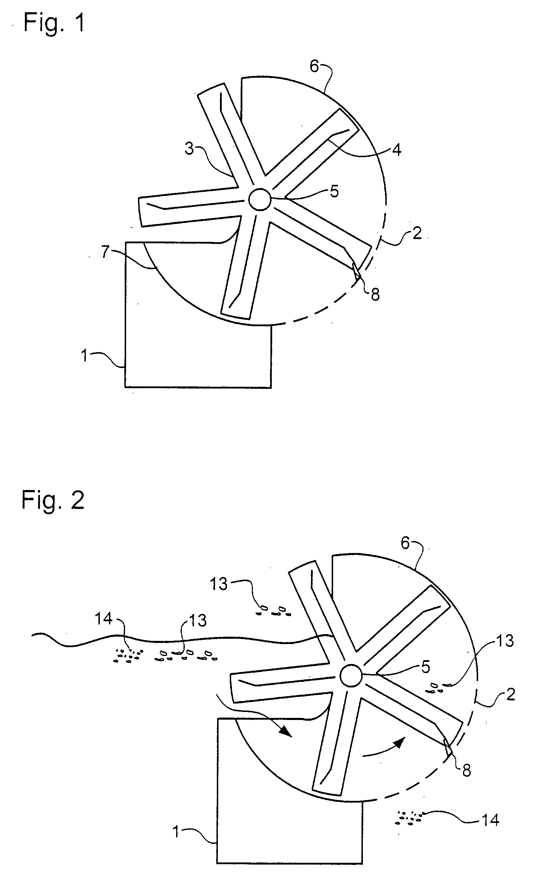

The screening device shown in Figure 1 comprises a framework 1 which supports a generally cylindrical chamber formed by a deflector plate 7, screen panel 2 and shield plate 6. The deflector plate 7, screen panel 2 and shield plate 6 each, in section, extend around approximately a quarter of a circle with the fourth quarter being left open. In use, the chamber is disposed with its axis generally horizontal so that the open quarter is in an upper part of the side receiving the liquid flow and the screen panel in the lower portion of the other side and opening into the channel for screened liquid. In this arrangement, liquid, usually water, can flow in the open quarter and out of the screen panel 2. The open quarter then forms an unscreened inlet from a first channel and the screen panel forms a screened outlet to a second channel. The screen panel 2 may take any suitable form to pass only debris of a certain minimum size. The screen panel 2 may be replaceable and may comprise a fixed grid which supports a replaceable mesh with smaller holes.

To prevent the screen panel 2 becoming clogged with debris that is too large to pass through it, a cleaning drum 3 is provided. This comprises a plurality of blades 4 mounted radially. The cleaning drum 3 is rotatably mounted by bearing assembly 5 concentrically within the cylindrical chamber formed by deflector plate 7, screen panel 2 and shield plate 6. The blades 4 act as a water wheel so that the cleaning drum 3 is driven to rotate by the flow of water from the inlet to and out of screen panel 2. End portions of the blades 4 may be angled backwards relative to the direction of rotation in use of the device and are provided with sealing strips 8 or brushes to provide a seal to the walls of the chamber and also effect the cleaning of the screen panel 2.

The deflector plate 7 is provided in this embodiment to ensure a good head of water to provide sufficient power to drive the cleaning drum 3. However, the screen may retain solid debris when the cleaning drum stops rotating and so the deflector plate 7 is preferably omitted in applications where a sufficient head of water to drive the cleaning drum can be expected.

The use of the apparatus is shown in Figure 2. The liquid on the inlet side of the device contains large debris items 13 and small debris items 14. Both large and small debris items 13, 14 will flow into and around the screen as indicated by arrows. The smaller debris items 14 may pass through the screen panel 2 but larger debris items 13 are prevented from doing so. These are then picked up and swept around by rotation of the cleaning drum. The shield plate 6 prevents the larger debris items 13 from being ejected at the outlet side of the screen and they are instead ejected through the inlet, back into the main liquid flow.

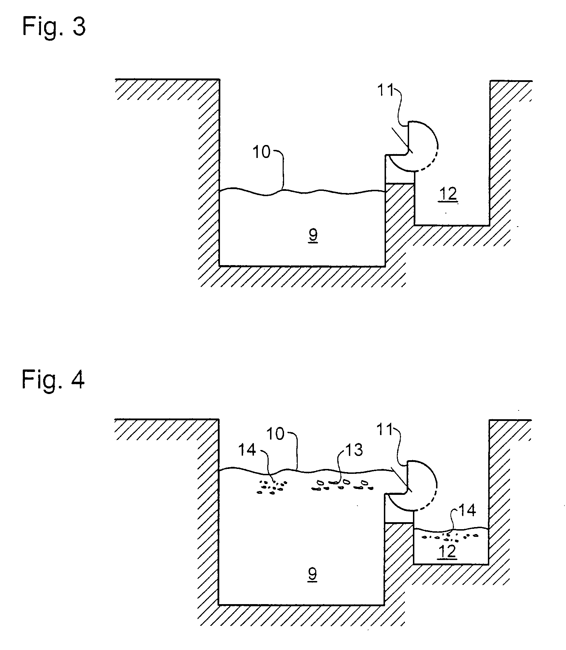

Figures 3 and 4 show the screening device of the invention used in a municipal wastewater channel. The wastewater channel comprises a main channel 9 (first channel) and an overflow channel 12 (second channel) separated by a wall on top of which the screen device 11 is mounted. In the situation shown in Figure 3, the water level 10 in the main channel 9 is relatively low and the screening device is not employed. However, when the water level 10 in the main channel 9 rises, e.g. because of a storm, the screen 11 becomes operative. In this situation the water level 10 is above the level of the inlet to the screen 11 allowing water to flow into and through the screen 11 to the overflow channel 12. Small debris items 14 may pass through the screening device 11 but larger items 13 are returned to the main flow preventing blockage of the overflow channel 12. It has also been found that the splashing which occurs upon rotation of the cleaning drum 3 in the screening device 11 tends to discourage floating debris from entering the screening device 11 thereby increasing its effectiveness.

The screening device 11 is preferably arranged so as to be self-operating, driven by the flow of water through it. However, in case this flow does not provide sufficient motive power, an additional, e.g. electric, motor can be provided to drive the cleaning drum 3. Appropriate sensors e.g. float switches, may also be provided to automatically turn on the motor if the waste water level rises to the appropriate level.

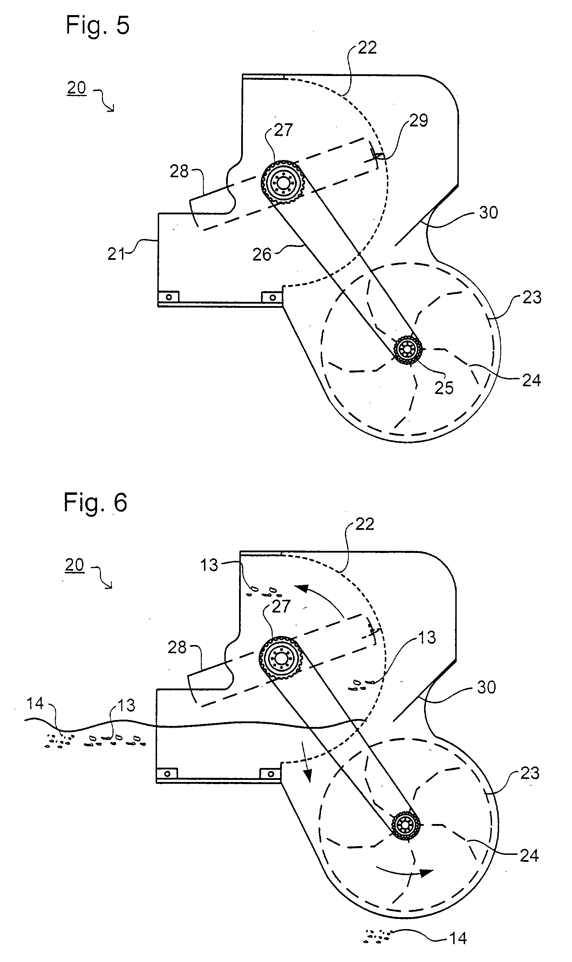

A second embodiment of the present invention is shown in Figures 5 and 6. This embodiment may be used in similar applications, and in a similar way, to the first embodiment.

The screening device 20 of the second embodiment comprises a framework 21 which supports a generally part-cylindrical screen plate 22 and, at the lower part, a drum 23 which carries a plurality of paddles blades 24. Mounted at one end of the drum 23 is a sprocket 25 over which passes a belt or chain 26, which in turn passes over an upper sprocket 27. The upper sprocket 27 is mounted to a bobbin 28 disposed within the generally part-cylindrical screen plate 22 and has mounted thereon a plurality of brushes 29. The brushes 29 sweep the inner surface of the screen plate 22 and remove debris from it. A deflector plate 30 is provided to direct liquid flowing through the screen in high fluid conditions onto the left side (as shown) of the drum 23.

Figure 6 shows the screen device of the second embodiment in use. Water on the inlet side of the device flows into the screening chamber defined by generally part-cylindrical screen plate 22 and through the screen plate, falling onto drum 23. The water falling onto paddles 24 drives drum 23 to rotate which in turn drives bobbin 28 causing brushes 29 to sweep the inner surface of the screen 22. The water on the inlet side may include small debris items 14 and larger debris items 13 suspended or floating. The smaller debris items 14 pass through screen plate 22 but larger debris items 13 are trapped and swept out of screen plate 22 by brushes 29 on bobbin 28. The height of the fall of the water onto paddle drum 23 and the gearing effected by the relative sizes of sprockets 25 and 27 can be varied to ensure that bobbin 28 is driven at an appropriate speed, and with appropriate force, in expected flow conditions. In installations where power can be provided a motor may be connected directly to sprocket 27 to drive bobbin 28 either supplementing or replacing the paddle drum 23.

Whilst we have described above preferred embodiments of the present invention it will be appreciated that modifications may be made by the person skilled in the art. The above description is not intended to be limitative of the invention which is defined by the appended claims. In particular, the screening device of the present invention may be constructed at any size, diameter and length, appropriate to the use to which it is to be put.

## Claims

1. A screening device comprising a generally cylindrical, horizontally disposed chamber (2, 6, 7) having an unscreened inlet from a first channel in a first side and a screened outlet (2) to a second channel in a lower portion of a second side; and a rotatable cleaning member (3) disposed within said chamber and arranged to rotate with a flow of water from said inlet to said screened outlet to sweep said screened outlet, and to return debris swept from said screened outlet to said first channel.

2. A screening device according to claim 1 wherein said cleaning member (3) comprises a plurality of radial blades (4) extending generally parallel to the axis of said chamber and for substantially the whole length thereof.

3. A screening device according to claim 2 wherein each of said radial blades (4) is provided with a flexible web (8) at its outer most end to form a seal with the wall of said chamber.

4. A screening device according to claim 1 further comprising a paddle drum (23) positioned below said screened outlet (2) so as to be driven to rotate by liquid flowing out of said screened outlet and drive means (25, 26, 27) connecting said paddle drum (23) to said rotatable cleaning member (28, 29) so that rotation of said paddle drum drives said rotatable cleaning member.

5. A screening device according to claim 4 wherein said rotatable cleaning member comprises a bobbin (28) having mounted thereon at least one brush (29) arranged to sweep said screened outlet.

6. A screening device according to claim 4 or 5 wherein said drive means comprises first and second sprockets (25, 27) respectively provided on said paddle drum (23) and said rotatable cleaning member (28, 29) and a belt or chain (26) connecting said first and second sprockets.

7. A screening device according to any one of claims 1 to 6 wherein said cleaning member (3, 28, 29) is adapted to be rotatable under the pressure of the flow of liquid from said inlet to said screen outlet without additional motive power.

8. A screening device according to any one of claims 1 to 6 further comprising a motor for driving said rotating cleaning member to rotate.
